# EUROPEAN PATENT SPECIFICATION

(11) **EP 1 721 832 B1**
(45) Date of publication and mention of the grant of the patent: **02.12.2009**
(21) Application number: 05076074.3
(22) Date of filing: 09.05.2005
(51) Int. Cl.: B65D 21/02

(54) **Nestable Trays**
Schachtelbare Schalen
Barquettes emboîtables

(43) Date of publication of application: 15.11.2006
(73) Proprietor: NV Omniform SA, 1301 Wavre (BE)
(72) Inventor: Wambeke, Alain Marcel, 3440 Zoutleeuw (BE); Lagaeysse, Guy, 4100 Seraing (BE)
(74) Representative: Quintelier, Claude

(56) References cited:
- DE-A1- 1 940 970
- DE-A1- 10 010 341
- GB-A- 1 143 926
- GB-A- 1 344 511
- US-A- 3 272 371
- US-A- 5 575 399
- US-B1- 6 261 504

## Description

The present invention relates to stacking trays. More in particular, the present invention relates to a set of stackable plastic trays having spacing projections to prevent jamming.

The problem of jamming or sticking that may occur when similar flat objects are stacked has been known for over 75 years. United States Patent US 1 786 733, published in 1930, discloses container lids having annular ribs of which the diameter may vary. When stacked, alternate lids have differently dimensioned annular ribs so that these ribs cannot come into registry. As a result, the annular ribs serve as spacing projections which prevent close contact between adjacent lids which might result in their adhering together.

United States Patent US 3 654 076, published in 1972, discloses a stack of nestable stacking trays made of moulded pulp. Each tray is provided with anti-jamming steps which function to space adjacent trays a predetermined distance from each other to prevent jamming and wedging of the sidewalls of the trays when the trays are nested one within the other to form a vertical stack. Every other tray in the vertical stack has a similar arrangement of hollow anti-jamming steps different from the remaining trays of the stack.

United States Patent US 3 672 538, also published in 1972, discloses disposable dishes which have upstanding ribs to space them apart. The chances of the ribs fitting into the ribs of the next dish are minimised by having the ribs non-uniformly spaced apart around the rim of the disposable dish.

All these known solutions have in common that the relative locations of the spacing projections are chosen such that these projections cannot be positioned above each other: the spacing projections of a particular object cannot rest on the spacing projections of the object underneath. The present inventors have realised that this spacing by relative translation of the projections is not always advantageous. For various technical and aesthetic reasons it is desirable to have projections which may have substantially the same relative positions in adjacent stacked objects.

Although related to coverlids and not to trays, DE 1940970A1 describes a solution in order to avoid interlocking of the coverlids when stacked. According to DE 1940970, the spacing projections of the different cover lids are either located at different positions on the coverlid or the spacing projections on a same coverlid have each time a different orientation with respect to each other so that, when stacked, due to their position or orientation interlocking is avoided. Such a solution is however energy and time consuming as the punching tool has to be constantly changed in position or orientation.

It is therefore an object of the present invention to overcome these and other problems of the Prior Art and to provide a stack of objects in which adjacent objects may have projections at substantially identical relative locations while spacing the objects apart and thereby avoiding any interlocking of the objects, without leading to an expensive manufacturing process.

Accordingly, the present invention provides a set of trays, each tray comprising a base surface from which at least one spacing projection protrudes, which spacing projection is arranged to rest on a corresponding spacing projection of a lower tray when stacked and which spacing projection is further arranged so as to avoid interlocking with the corresponding spacing projection of a lower tray by being rotated relative to said corresponding spacing projection.

In the tray of the present invention, a spacing projection of a tray may rest on the spacing projection of a lower tray. That is, the spacing projections may have identical or almost identical relative positions on the trays. However, as the spacing projections of one tray are rotated relative to their counterparts of the other tray, it is possible for the spacing projections to avoid registering and thus to space the trays apart.

In order to avoid registering, the spacing projections of the present invention should have a non-circular contact surface, that is, a non-circular pattern in the surface which, when stacked, rests on the lower spacing projection. The pattern could be rectangular (bar-shaped), square, triangular, or irregularly shaped. Any such pattern should be capable of avoiding the registering of the pattern with another, similar pattern if the patterns are rotated relative to each other.

The angle over which a spacing projection is rotated may vary, and may depend on the particular pattern. Typically a rotation angle of 90° or even 180° may be used, but smaller angles may also be feasible, such as 45°, 30° or 15°. Although the spacing projections are preferably each rotated about its own respective axis or centre, this is not essential and a certain offset between the rotation axis and the centre of the spacing projection may be present. Such an offset typically produces both a rotation and a translation.

By providing spacing projections which are rotated relative to each other, these spacing projections may conveniently rest upon each other without interlocking. However, it is not essential for the spacing projections to have identical relative locations on the trays. Accordingly, in a further embodiment a spacing projection of a tray is translated relative to a corresponding spacing projection of the next or lower tray. That is, the spacing projections are both rotated and translated. This reduces the possibility of the spacing projections interlocking even further. The relative displacement caused by the translation may be relatively small yet may still be effective, as the combined effect of rotation and translation effectively avoids the sticking of the stacked trays.

The spacing projections may advantageously constitute support elements of the tray. For example, the spacing projections of the present invention may constitute the legs of the tray, and may project downward from the base surface of the tray. However, it is also possible for the spacing projections to protrude from a rim of the tray.

The trays may be made of plastic, preferably plastic sheet material which can be given a suitable form by thermoforming. Those skilled in the art will know that thermoforming is a process of producing a three-dimensional object from a thermoplastic sheet, for example by clamping the sheet in a frame, heating the sheet and applying differential pressure using a press or die. Instead of thermoforming, other processes may be used, such as injection moulding or extrusion. The present invention is therefore also applicable to trays and other relatively flat objects made of moulded or extruded plastic.

If the trays are made of plastic sheet material, each spacing projection may conveniently be defined by a deformation of the plastic sheet material. The spacing projection may then be constituted by a pattern pressed into the sheet material.

Instead of plastic sheet material, other materials may be used, such as paper, carton and other (sheet) materials.

Although the spacing projections may be arranged in various positions, it is preferred that at least one spacing projection is located near an edge of a tray. This provides a stable stacking configuration, in particular when multiple spacing projections (three, four or more) are arranged near an edge of the tray.

The present invention also provides a single tray of the set of trays defined above. It is noted that a set of trays may comprise two, three, four of more trays, for example 50, 100 or 500 trays.

The present invention additionally provides a device for producing trays as defined above, the device comprising rotatable press parts for forming the rotated spacing projections.

It is noted that the term "tray" is used in this document to denote relatively flat and thin objects, and that this term may comprise, but is not limited to, food trays, lids, plates, dishes, saucers and similar objects.

The present invention will further be explained below with reference to exemplary embodiments illustrated in the accompanying drawings, in which:
Fig. 1 schematically shows, both in top and cross-sectional view, a pair of trays according to the present invention.
Fig. 2 schematically shows, both in top and cross-sectional view, a device for producing the trays according to the present invention.

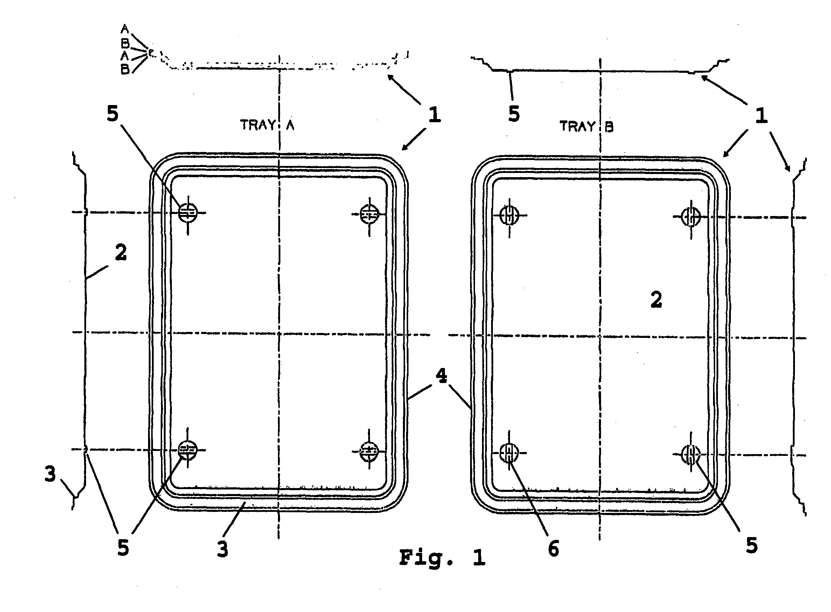

The trays 1 shown merely by way of non-limiting example in Fig. 1 each comprise a base surface 2 having a peripheral upstanding rim 3 adjacent an outer edge 4. From the base surface 2 support elements 5 project. As can be seen in the cross-sectional view on the left in Fig. 1, the support elements 5 project, in this particular embodiment, in the opposite direction to the upstanding rim 3.

Each support element 5 is provided with a rectangular slot 6. In the tray on the left-hand side in Fig. 1, denoted "tray A", the slots 6 have a horizontal orientation relative to the drawing, while in the tray on the right-hand side in Fig. 1, denoted "tray B", the slots have a vertical relative orientation. As a result, the support elements 5 of trays A and B will not be able to interlock when the trays are stacked. Accordingly, the support elements 5 serve as spacing projections which space the trays apart so as to facilitate the removal of individual trays from a stack of trays.

In the exemplary embodiment of Fig. 1 the spacing projections 5 of tray A are rotated over an angle of 90° relative to their counterparts of tray B. It will be clear that other angles may also be used, for example angles of 45° or even 30°. In addition, the angles over which the support elements 5 have to be rotated about their respective axes to avoid interlocking will depend on the particular design of these support elements. In the example shown, where a longitudinal slot 6 is used, the preferred angle of rotation is 90°. However, instead of the rectangular slot 6, a triangular or square pattern could be used which effectively avoids interlocking when rotated over only 45°.

It is noted that in the embodiment shown the section of the support elements or legs 5 defined by the slots 6 extend further than the remainder of the support elements. As a result, the parts defined by the slots 6 constitute the support surfaces of the tray I. However, this arrangement could be reversed in that the area of the support elements 5 surrounding the slots 6 could extend beyond the slots and thus form the support surfaces.

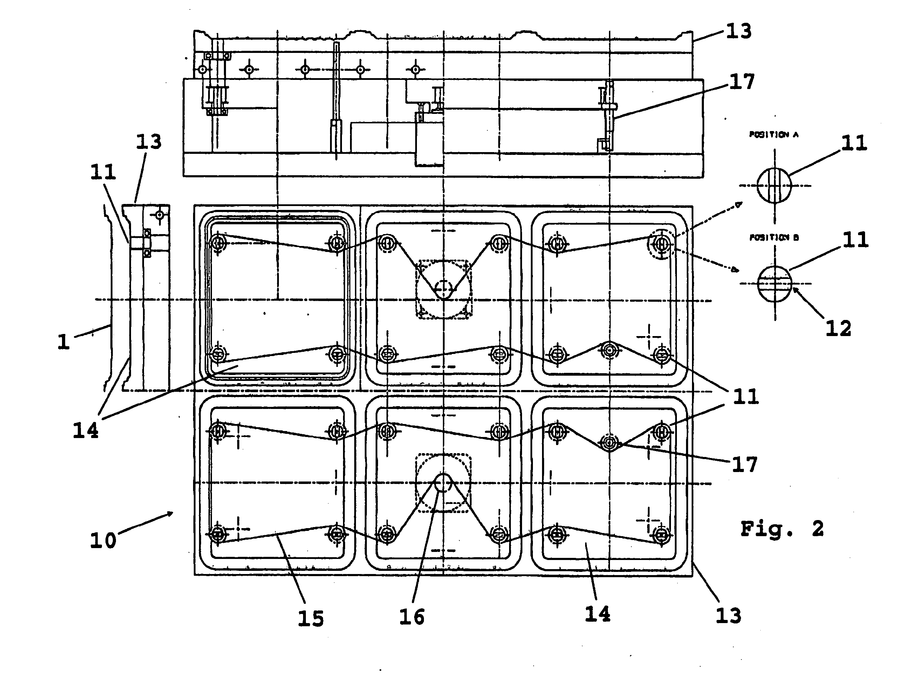

A device for producing the trays according to the present invention is schematically shown in Fig. 2. The device 10 comprises a die or press 13 for thermoforming a set of trays. In the embodiment shown the press 13 comprises six sections 14, each press section 14 being designed for forming a single tray.

In accordance with the present invention, each press section 14 comprises at least one rotatable press element 11. In the embodiment shown, four rotatable press elements 11 are provided in each press section 14 so as to form four spacing projections per tray. Each rotatable press element 11 is provided with a slot 12 for forming the slots (6 in Fig. 1) of the tray.

The rotatable press elements 11 are rotated by two belts 15 which run underneath the press 13, each belt rotating twelve press elements. The belts 15 are each driven by a motor 16 and guided by a spindle 17. The motors 16 are used intermittently to rotate the press elements 11 after forming a set of trays.

The rotation of the press elements 11 is indicated on the right in Fig. 2: in position A the slot 12 is vertical relative to the drawing, while in position B the slot 12 is horizontal relative to the drawing. Accordingly, a rotation over 90° is carried out. However, other rotation angles, such as 45°, may also be used.

The cross-sectional view on the left of Fig. 2 shows a press section 14 of the press 13, and a tray 1 shaped by the press section. It will be clear from Fig. 2 that the rotatable press elements 11 form the support elements 5 of Fig. 1, while the slots 12 form the rotated slots 6 of the trays 1. Instead of using rotatable press elements, fixed press elements 11 may be used, which may be integral with the press sections 14, provided that the press elements of different press sections 14 have distinct orientations. That is, trays according to the present invention can be produced using differently shaped press sections, the slots or patterns 12 in one press section having a different (but fixed) orientation from the slots or patterns 12 in another press section. It will be understood that when the formed trays are removed from the press 13, they are stacked in such a way that the spacing projections of each tray have a different orientation from the spacing projections of the tray below.

The trays 1 are preferably made of plastic sheet material, for example polyethylene sheets. However, other materials may also be used, for example paper or carton. When plastic sheet material is used, the material may be forced into the press parts using air pressure. Typically, however, a counterpart press (not shown) matching the shape of press 13 will be used to form the trays.

The present invention is based upon the insight that the locations of spacing projections of stacked trays may coincide, provided that the spacing projections are rotated relative to each other.

It will be understood by those skilled in the art that the present invention is not limited to the embodiments illustrated above and that many modifications and additions may be made without departing from the scope of the invention as defined in the appending claims.

## Claims

1. A set of trays, each tray (1) comprising a base surface (2) from which at least one spacing projection (5) protrudes, which spacing projection (5) is arranged to rest on a corresponding spacing projection (5) of a lower tray when stacked, **characterised in that** said spacing projection (5) and said corresponding spacing projection (5) are provided with a slot (6) extending further than the remainder of the spacing projection and applied in such a manner that said slot on said spacing projection (5) has a first orientation and said slot on said corresponding spacing projection (5) has a second orientation, said first orientation being rotated relative to said second orientation so as to avoid interlocking between said spacing projection (5) and said corresponding spacing projection (5).

2. The set of trays according to claim 1, wherein a spacing projection (5) of a tray is translated relative to the corresponding spacing projection of the lower tray.

3. The set of trays according to claim 1 or 2, wherein the spacing projections (5) may advantageously constitute support elements of the tray.

4. The set of trays according to any of the preceding claims, wherein the at least one spacing projection (5) is located near an edge (4) of a tray.

5. The set of trays according to any of the preceding claims, made of plastic sheet material.

6. The set of trays according to claim 5, wherein each spacing projection (5) is defined by a deformation of the plastic sheet material.

7. A device (10) for producing a set of trays (1) according to any of the claims 1 - 6, the device comprising rotatable press parts (11) for forming the rotated spacing projection, **characterised in that** said press parts are provided with a slot (12) for forming the slots of the tray.

8. The device according to claim 7, arranged for rotating the rotatable press parts (11) after forming a tray.

9. The device according to claim 7 or 8, arranged for rotating the rotatable press parts (11) over an angle of 90°.

## Patentansprüche

1. Gruppe von Schalen, wobei jede Schale (1) eine Basisfläche (2) umfasst, von welcher mindestens eine Abstandhalter-Auskragung (5) hervorsteht, wobei die Abstandhalter-Auskragung (5) so angeordnet ist, dass sie auf einer entsprechenden Abstandhalter-Auskragung (5) einer unteren Schale aufliegt, wenn diese gestapelt werden, **dadurch gekennzeichnet, dass** die Abstandhalter-Auskragung (5) und die entsprechende Abstandhalter-Auskragung (5) mit einer Nut (6) versehen sind, die sich weiter als der Rest der Abstandhalter-Auskragung erstreckt und so angewendet wird, dass die Nut auf der Abstandhalter-Auskragung (5) eine erste Ausrichtung aufweist und die Nut auf der entsprechenden Abstandhalter-Auskragung (5) eine zweite Ausrichtung aufweist, wobei die erste Ausrichtung im Verhältnis zu der zweiten Ausrichtung gedreht ist, um ein Verblocken zwischen der Abstandhalter-Auskragung (5) und der entsprechenden Abstandhalter-Auskragung (5) zu vermeiden.

2. Gruppe von Schalen nach Anspruch 1, wobei eine Abstandhalter-Auskragung (5) einer Schale im Verhältnis zu der entsprechenden Abstandhalter-Auskragung unteren Schale verschoben ist.

3. Gruppe von Schalen nach Anspruch 1 oder 2, wobei die Abstandhalter-Auskragungen (5) vorteilhafter Weise Trägerelemente der Schale bilden können.

4. Gruppe von Schalen nach einem der vorhergehenden Ansprüche, wobei die mindestens eine Abstandhalter-Auskragung (5) in der Nähe eines Randes (4) einer Schale befindet.

5. Gruppe von Schalen nach einem der vorhergehenden Ansprüche, welche aus einem Kunststoffplatten-Material hergestellt sind.

6. Gruppe von Schalen nach Anspruch 5, wobei jede Abstandhalter-Auskragung (5) durch eine Verformung des Kunststoffplatten-Materials definiert ist.

7. Vorrichtung (10) zur Herstellung einer Gruppe von Schalen nach einem der Ansprüche 1 bis 6, wobei die Vorrichtung drehbare Pressteile (11) umfasst, um die gedrehte Abstandhalter-Auskragung zu formen, **dadurch gekennzeichnet, dass** die Pressteile mit einer Nut (12) zum Formen der Nuten der Schale versehen sind.

8. Vorrichtung nach Anspruch 7, welche so eingerichtet ist, dass die drehbaren Pressteile (11) nach dem Formen einer Schale gedreht werden.

9. Vorrichtung nach Anspruch 7 oder 8, welche so eingerichtet ist, dass die drehbaren Pressteile (11) um einen Winkel von 90° gedreht werden.

## Revendications

1. Ensemble de barquettes, chaque barquette (1) comprenant une surface de base (2) de laquelle fait saillie au moins une protubérance (5) d'espacement, laquelle protubérance d'espacement (5) est agencée pour reposer sur une protubérance d'espacement correspondante (5) d'une barquette inférieure quand elles sont empilées, **caractérisé en ce que** ladite protubérance d'espacement (5) et ladite protubérance d'espacement correspondante (5) sont pourvues d'une fente (6) s'entendant plus loin que le reste de la protubérance d'espacement et appliquée de telle manière que ladite fente sur ladite protubérance d'espacement (5) a une première orientation et ladite fente sur ladite protubérance d'espacement correspondante (5) a une seconde orientation, ladite première orientation étant tournée par rapport à ladite seconde orientation de manière à éviter une interconnexion entre ladite protubérance d'espacement (5) et ladite protubérance d'espacement correspondante (5).

2. Ensemble de barquettes selon la revendication 1, dans lequel une protubérance d'espacement (5) d'une barquette est translatée par rapport à la protubérance d'espacement correspondante de la barquette inférieure.

3. Ensemble de barquettes selon la revendication 1 ou 2, dans lequel les protubérances d'espacement (5) peuvent avantageusement constituer des éléments de support de la barquette.

4. Ensemble de barquettes selon l'une quelconque des revendications précédentes, dans lequel ladite au moins une protubérance d'espacement (5) est située près d'un bord (4) d'une barquette.

5. Ensemble de barquettes selon l'une quelconque des revendications précédentes réalisé en matière plastique en feuille.

6. Ensemble de barquettes selon la revendication 5, dans lequel chaque protubérance d'espacement (5) est définie par une déformation de la matière plastique en feuille.

7. Dispositif (10) pour produire un ensemble de barquettes (1) selon l'une quelconque des revendications 1 - 6, le dispositif comprenant des parties de pressage pouvant tourner (11) pour former la protubérance d'espacement tournée, **caractérisé en ce que** lesdites parties de pressage sont pourvues d'une fente (12) pour former les fentes de la barquette.

8. Dispositif selon la revendication 7, agencé pour faire tourner les parties de pressage pouvant tourner (11) après avoir formé une barquette.

9. Dispositif selon la revendication 7 ou 8, agencé pour faire tourner les parties de pressage pouvant tourner (11) sur un angle de 90°.
